# EUROPEAN PATENT APPLICATION

(11) **EP 1 389 767 A1**
(43) Date of publication of application: **18.02.2004**
(21) Application number: 03077412.9
(22) Date of filing: 01.08.2003
(51) Int. Cl.: G06F 17/60

(54) **A method for using remote imaging to predict quality parameters for agricultural commodities**

(30) Priority: 13.08.2002 US 217739
(71) Applicant: EASTMAN KODAK COMPANY, Rochester, New York 14650 (US)
(72) Inventor: Robeson, Daniel C., Rochester, New York 14650-2201 (US); Paz-Pujalt, Gustavo Roberto, Rochester, New York 14650-2201 (US); Spoonhower, John Philip, Rochester, New York 14650-2201 (US); Stephany, Thomas Michael, Rochester, New York 14650-2201 (US)
(74) Representative: Haile, Helen Cynthia

(57) **Abstract**

A method for predicting or monitoring the economic value of an agricultural commodity, the method includes the steps of remotely obtaining a image data; analyzing the remote image for a predetermined characteristics; using the analysis to determine a viability of the agricultural commodity; and transmitting the viability data to an interested party.

## Description

The invention relates generally to the field of remote imaging, but more particularly to the use of remote imaging to add value to the process of determining the quality level of agricultural commodities, as quality has significant impact on pricing in the commodities arena. More particularly, the invention is directed to the remote analysis of vegetation to determine the viability of various crops, determine steps needed to maximize viability, and additionally sell that information to interested parties. The present invention also provides utility in sorting or categorizing crops for sale, as efficiencies in crop handling and storage provides greater commodity profitability.

It is known by those skilled in the arts of analysis that remote analysis of vegetation is possible by various remote sensing means. This is accomplished through the Normalized Difference Vegetation Index or NDVI. The NDVI method is associated with measures of the "greenness" or "biomass" as an indicator of the health of a crop. Additionally this "greenness" provides a useful method to increase crop viabilitys by maximizing relative health, and helping to determine the correct application of fertilizers and water. Crop-based variables such as analyzing the amount of leaf chlorophyll or color reflectance show promise for many commodities such as corn. Bridget Beesley of the University of South Carolina has demonstrated success in this field in technical papers such as "Analysis of Vegetation Indices as a Measure of Applied Water and Nitrogen Treatments in a Cornfield". Also disclosed in this area is the use of high-resolution color infrared images (CIR) to detect in-field variability in soils and crops due to available nitrogen, in technical paper "In-Field Variability Detection and Viability Prediction in Corn Using Digital Aerial Imaging", by Gopala and Tian of the University of Illinois at Urbana. Further, Steward and Tian of the University of Illinois have disclosed that the use of machine vision to analyze the weed content of a crop is viable. Furthermore, Steward and Tian utilize Bayesian Classifiers to analyze remotely sensed data. Such Bayesian Classifiers readily lend themselves to separate and classify the data types dealt with in this disclosure.

It is also known by those skilled in the arts of data analysis that data collected via remote imaging can be closely correlated to agricultural crop growth through initial detailed systematic measurement by ground scouts or a scientist's "on-foot" measurements. This technique, called "ground truth" is demonstrated in the publication Titled "From Sky to Earth...Researchers Capture Ground Truth", by Stelljes, Comis, Wood and Lyons, Agricultural Research, March 1999. Although the presently known analysis technologies exist, to the best of our knowledge, they have not been used for the purpose of using the information as a predictor of viability and quality to those who buy and sell agricultural commodities and other vegetation. The use of the aforementioned data to determine the quality of agricultural crops and vegetation in a given field before harvest considerably enhances and improves the pricing process for a commodity buyer by allowing the buyer to know the amount of product and quality of product on either a real or near-real time basis for the previously mentioned field. This information allows the commodity buyer to more accurately value a field for a prospective client. The client will now have more accurate knowledge of quality parameters for the field.

At this time it is routine for Agricultural Advisors to collect crop information via costly ground scouting methods. Sampling sizes are historically small, infrequent, and often pose statistical risk. Furthermore commonly used bench tests are time consuming and have limited value in drawing broad conclusions about comprehensive crop areas.

Consequently, it is highly desirable and of tremendous importance to acquire the most accurate and timely agricultural crop quality and viability information for the purpose of streamlining the operation of the commodities markets using the data derived from remote analysis.

The present invention is directed towards providing an improved way to get agricultural quality and viability information, and by extension, crop economic value and information into the possession of buyers and sellers of agricultural commodities. To overcome one or more of the problems set forth above. Briefly summarized, according to one aspect of the present invention, the invention resides in a method for predicting , monitoring, or estimating the economic value of an agricultural commodity, the method comprising the steps of obtaining a remote image; analyzing the remote image for a characteristics that are related to quality or quantitative parameters; using the analysis to determine a viability of the agricultural commodity; and transmitting the viability data to an interested party. Furthermore, this analysis could be extended to the comparison of geographically separated fields which aids economic decision making for commodities futures markets. In this context, futures is defined as commodities or stocks bought or sold upon agreement of delivery in time to come.

The above and other objects of the present invention will become more apparent when taken in conjunction with the following description and drawings wherein identical reference numerals have been used, where possible, to designate identical elements that are common to the figures.

The present invention has the following inherent advantages. For example, the analysis of remotely monitoring crop health and subsequent projected viability data based thereon will allow both growers and prospective buyers to determine the viability of an area of vegetation. Another distinct advantage of the present invention is that it lessens the need for human intervention as it pertains to data gathering, trips into inhospitable areas and conditions, expensive crop quality bench-tests, and small sample sizes which are often easily misinterpreted. This availability of more precise data for manipulation that better determines profitability, along with determining the timely use of water and fertilizers, is advantageous to the grower. Additionally, such remote sensing has the advantage of periodic monitoring the effects that changing weather conditions have on crops being monitored. Additionally weather monitoring assists growers and/or other interested third parties with a reliable predictor of future viabilitys, crop qualities and ultimately value and pricing.

The use of this weather information maximizes return on value for the grower. Additionally, the use of real-time weather information increases the probability of acceptable profit for all interested parties by allowing for a more accurate pricing of agricultural commodities by commodity buyers and sellers who increasingly trade on markets that have become more competitive, interconnected, and global in nature.
Fig. 1 is a space-based view of an application of remote imaging;
Fig. 2 is a ground-based view of an application of remote sensing;
Fig. 3 is a graph of intensity versus reflected wavelength;
Fig. 4 is a graph of two separate intensity versus reflected wavelength wideband reflectivity curves;
Fig. 5 is a software-based flowchart of a Bayes classifier;
Fig. 6 is a software-based flowchart of a Bayes classifier for incorporation of weather data;
Fig. 7 is a software-based flowchart of a Bayes classifier for incorporation of determining crop damage;
Fig. 8 is a block diagram detailing Bayes classifier data reports for sale to various interested customers;
Fig. 9 is a block diagram of sorted Bayes classifier data by physical characteristics;
Fig. 10 is a block diagram detailing a centralized organization routing agricultural commodity; wherein products of specific physical characteristics are delivered to specific customers, which require said physical characteristics; and
Fig. 11 is a diagram of agricultural commodities sorted by percent content of desired physical characteristics such as corn oil.

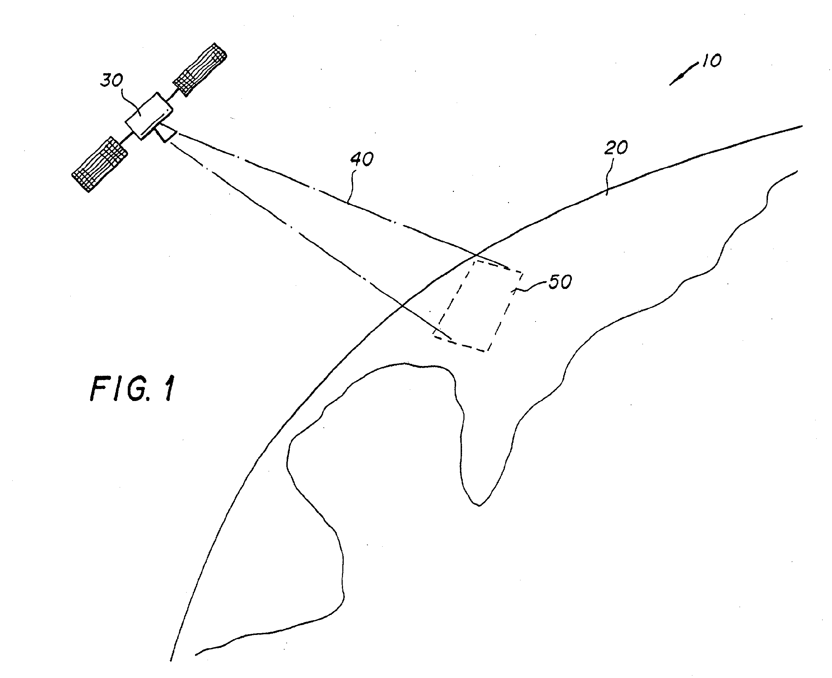

Referring to Fig. 1, there is shown a space-based aerial view **10** of a portion of the hemisphere of the planet earth **20**. A satellite **30** with remote sensing capability analyses via a remote sensing view **40**, a field **50** of crops shown in dashed line form.

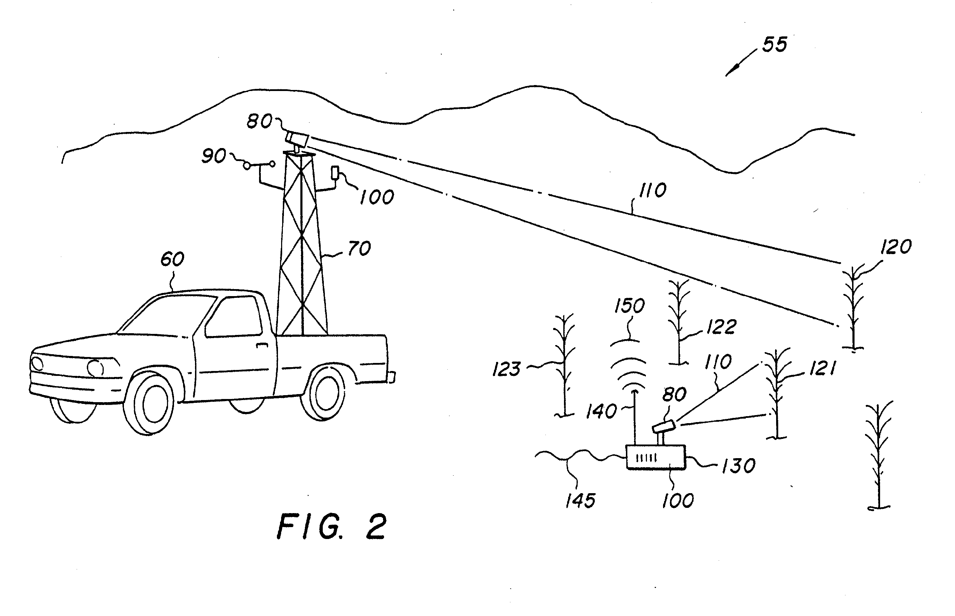

Referring to Fig. 2, there is shown a ground-based application **55** of the remote imaging of any number of agricultural crops or vegetation hereafter referred to for the purpose of exemplary illustration as "corn". Pickup truck **60** with a tower **70** supporting a remote camera **80** and a wind gauge **90** along with various atmospheric sensing instruments such as temperature, relative humidity, and barometric pressure in a container **100**. The camera **80** is shown sensing via viewing area **110** blue-ribbon corn **120**. Additionally shown is a ground-based remote sensor **130** sensing with camera **80** via viewing area **110** feed-quality corn stalk **121**. Remote sensor **130** has integrated therein atmospheric sensors **100** and communicates all gathered information via antenna **140** over communications link **150**. Additionally, a hard-link in the form of a cable **145** can be used instead of antenna **140**. At this point it should be understood, that persons skilled in the art should realize that there are other types of remote sensing schemes such as aircraft and the like.

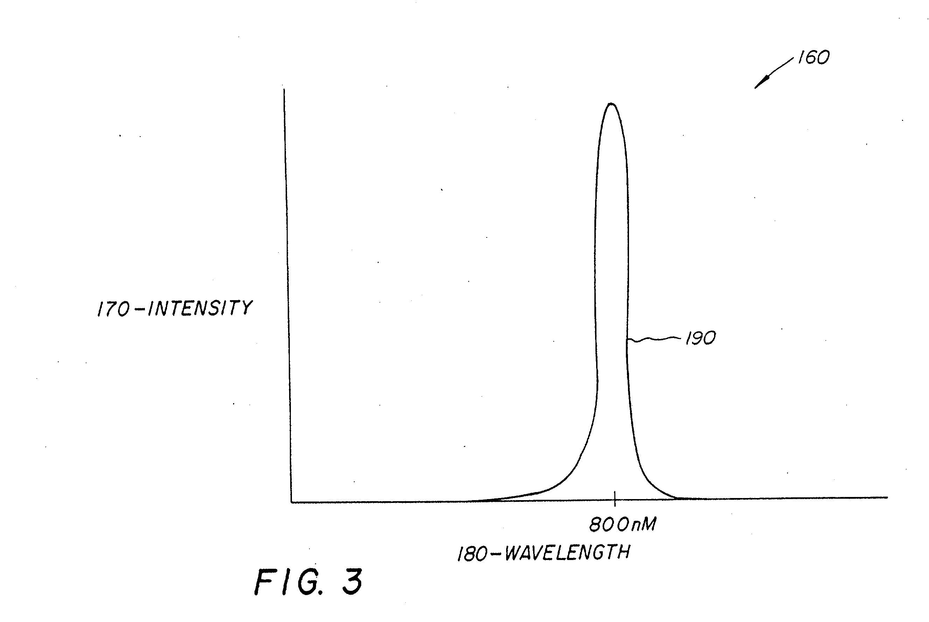

Referring now to Fig. 3, there is shown a graph **160** showing a distribution **190** of reflectance intensity **170** versus wavelength **180** in the color of green leaves. It should be understood that the reflectance of green leaves reflects highly in the infrared around an 800-nM wavelength. As pre-disclosed in the background, the intensity **170** of the crops' green-leaf reflectance spectrum as a function of wavelength **180** is an indicator of the overall health of said crop.

The overall health of the land can also be determined via remote sensing. Crop nitrogen content, soil moisture, soil fertility, soil organic content, land topography, weed content, and surface characteristics such as rocks and the like are all variables which affect crop viabilitys. Clearly, the optimum spectral wavelength region or regions in which to assess characteristics such as the above (crop nitrogen and the like) is determined by the specific chemical composition or characteristics of those factors which determine crop viability or health. For example, critical elements in the soil that lead to improved crop viability or health will be assessed at various reflectance wavelengths. Alternatively, organic content characteristics of soil like the relative concentration of decaying organic matter will be assessed at infrared wavelengths. Furthermore this can also be utilized to detect infestations or crops that have been tagged by a given marker related to the type of seed or otherwise any genetically engineered attributes or features.

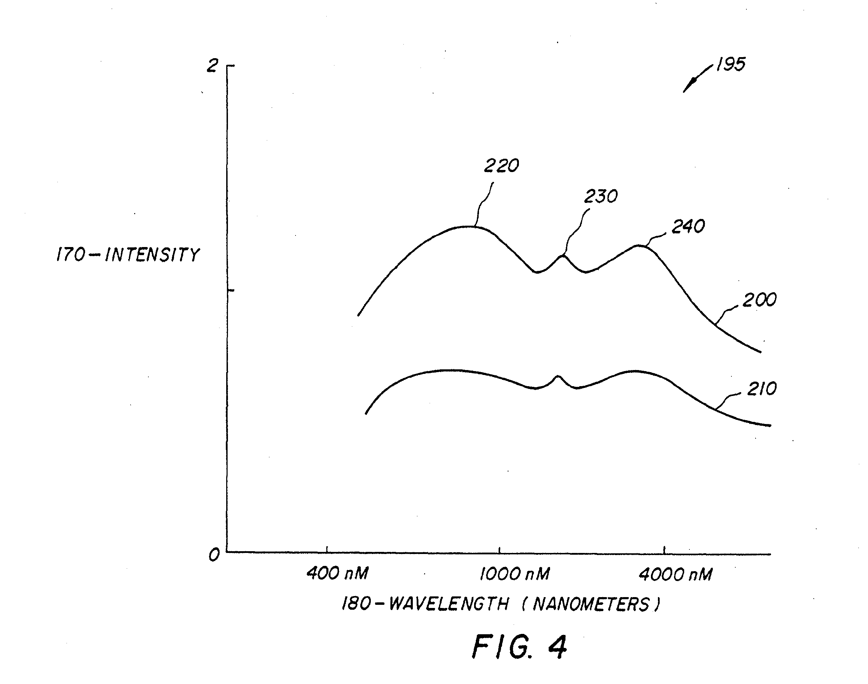

Referring now to FIG. 4, there is shown a dual graph **195** detailing two separate wideband intensity **170** versus wavelength **180** reflectivity curves. The intensity **170** of the reflected light versus the wavelength **180** of the reflected light from a field **50** of vegetation such as blue ribbon corn **120** is plotted as upper curve **200** and lower curve **210**. These two curves upper curve **200** and lower curve **210** represent spectral reflectance data of the same crop field **50** taken at different times. These data are derived through the spectral analysis of the reflected light from the field **50** of blue ribbon corn **120**. The upper curve **200**, which is higher in intensity **170** versus wavelength, shows greater amounts of Nitrogen **220**, water **230** and soil organic content **240** when compared to lower curve **210**. Assuming the spectral reflectance data shown as upper curve **200** were taken earlier in time than lower curve **210**, analysis of this result suggests degradation of the crop quality in this particular field **50**. Obviously, greatly differing curves can be obtained by the health of the area being analyzed, but the comparison of intensity **170** of reflectance versus wavelength is a powerful tool for the analysis of crop and field **50** health.

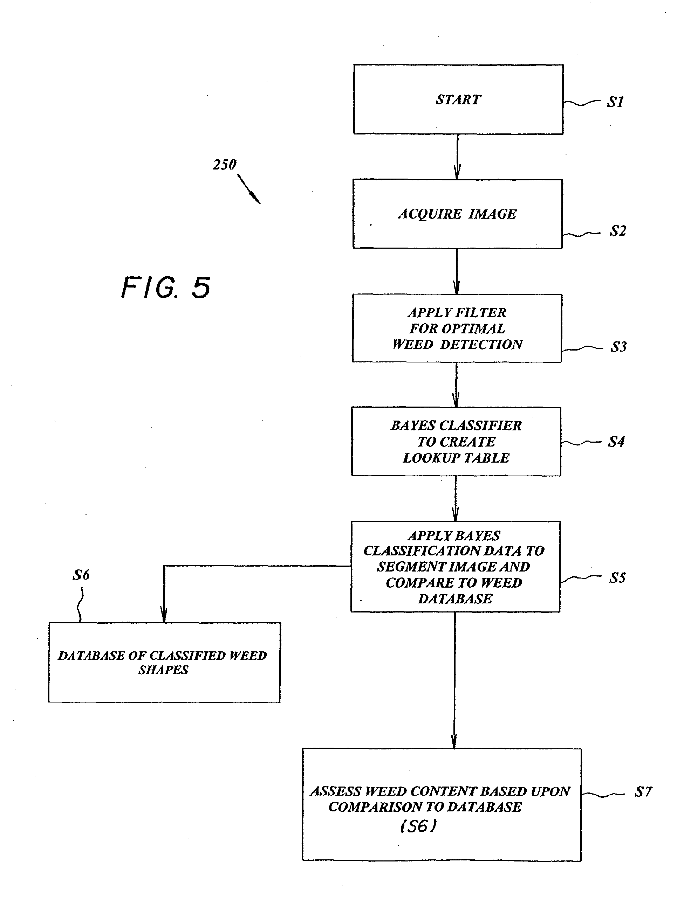

Referring to FIG 5, there is shown a flowchart **250**, that details the steps taken to determine the types of weeds contaminating blue ribbon corn **120**. At the start of a weed analysis **S1**, a remote image **S2** would be acquired and passed through either a software filter algorithm, expert system, or appraiser **S3**. The software filter, expert system or appraiser **S3** would separate image data into packets of like data that would then be passed to Bayes classifier **S4**. The Bayes classifier establishes a statistical certainty **S5** from the data and derives conclusions about the weed types and concentrations when the Bayes data is compared to a database of pre-identified weeds **S6**. That data is output as a weed report of weed content and concentration **S7**.

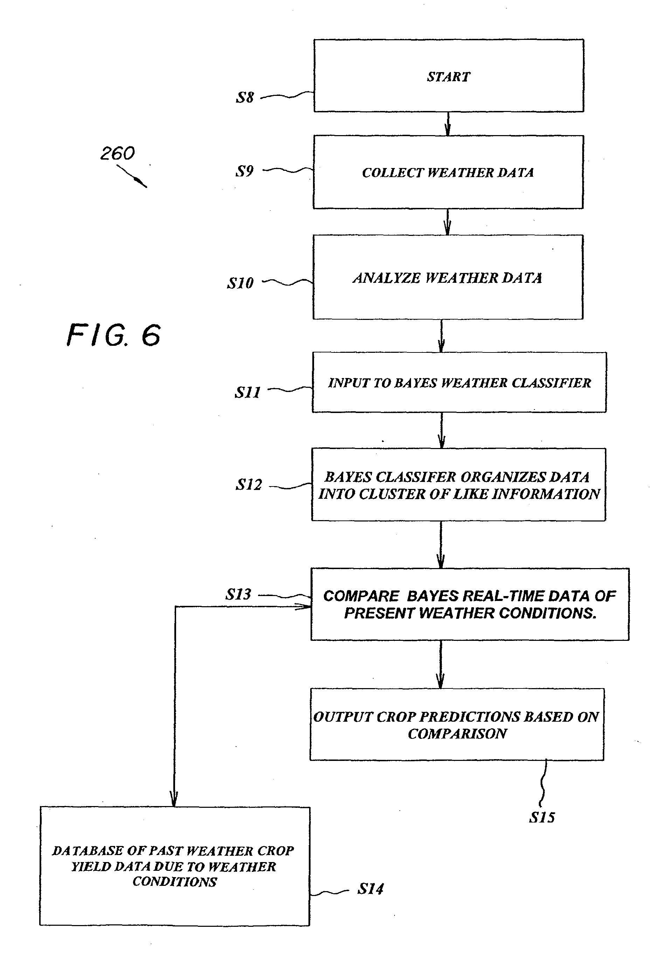

Referring now to FIG. 6, there is shown a weather flow-chart **260**, that details the steps taken to determine how weather affects the viability and quality of a field **50** of blue ribbon corn **120**. At the start of a periodic or real-time weather analysis **S8**, remote weather data would be collected **S9** from instruments such as wind gauge **90** and other atmospheric sensing instruments container **100** (FIG. 2). The collected weather data would be analyzed **S10** and passed to a Bayes weather classifier **S11**. After analysis by the Bayes classifier the weather data would be organized into clusters of like information **S12**. Output data **S12** represents real-time data of present weather conditions **S13**. The information would then be compared periodic or real-time to a database of past weather conditions correlated to crop viability data **S14**. This comparison will output crop predictions based on that comparison linking present predicted crop viability and crop quality data **S15**.

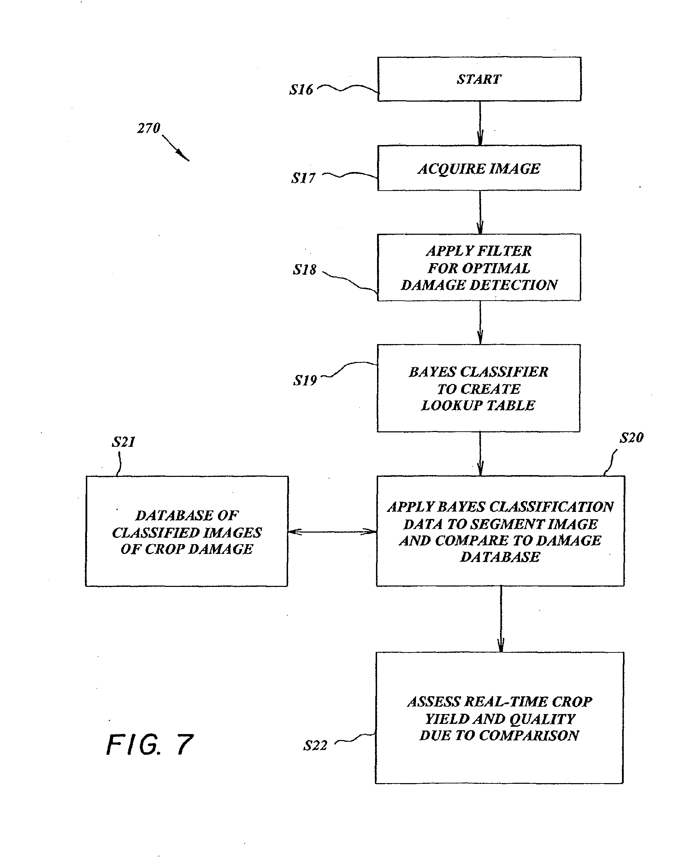

Referring now to FIG. 7, there is shown a database comparison flow-chart **270**, that shows the steps taken to determine how remote image data would be used to determine crop health and viability of a field **50** of blue ribbon corn **120**. A Bayes classifier based damage analysis compares previously stored damage data and compares that data to a recent image capture, to classify what type of damage has occurred to a crop field **50**, i.e. (drought, wind, hail, and the like). At the start of a damage analysis **S16** a remote image **S17** would be acquired and passed through software filter **S18**. The software filter **S18** would separate image data into packets of like data that would then be passed to Bayes classifier **S19**. The Bayes classifier **S19** will classify image data into segments **S20** that will then be compared to a database **S21** of previously classified images of crop damage. That data is then output as a crop damage report **S22** which will determine crop viability and quality real-time due to the comparison to the database of classified images **S21** since data in database has previously determined viabilitys and quality of crops due to previous incidences of crop damage. These data, which are compiled from previous time periods of analysis, give a valuable baseline reference of types of crop damage and how they influence crop viabilitys. Additionally, remote sensing of an area for a predetermined parameter such as oxygen in soil, oil composition in corn, sugar content in grapes, liquid content in juicing oranges and nitrogen in soil will determine if additional soil treatment such as fertilizer are needed. Over time, a plurality of such images has been obtained by the previously mentioned Bayesian. Factoring the changes in the predetermined parameters can be analyzed to determine the state of the crop at the time of the last image. By analyzing the most recently obtained images with either historic or other recently obtained images, corrective action can be taken such as watering the crops or adding appropriate fertilizers.

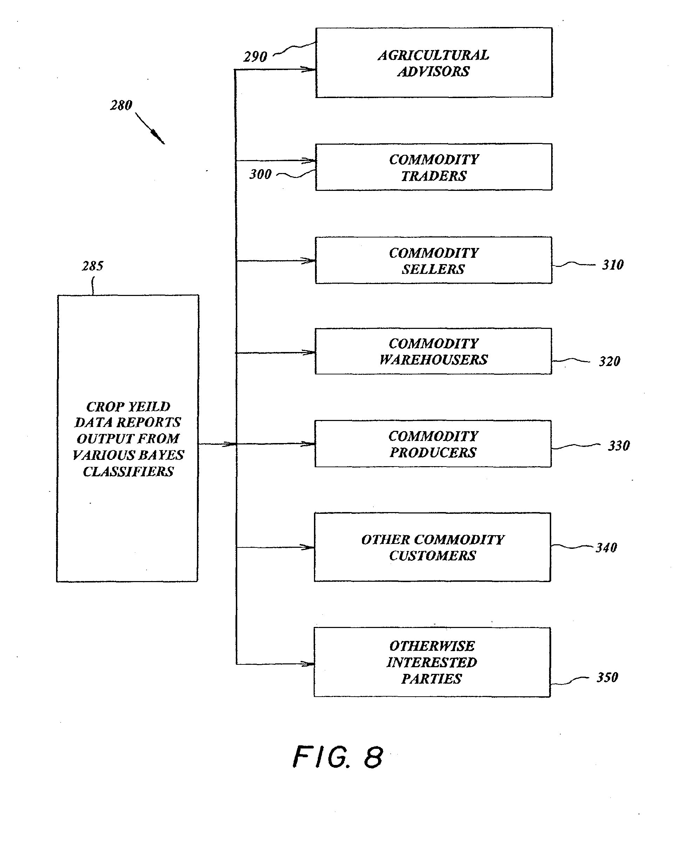

Referring now to FIG. 8 a block diagram **280** shows the various crop viability data reports which have been output from the various Bayes classifiers heretofore explained **285** are transmitted (offered for sale) to customers that have an interest in futures, such as agricultural advisors **290**, commodity traders **300**, commodity sellers **310**, commodity warehousers **320**, commodity producers **330**, other commodity customers **340**, or otherwise interested parties **350**. Futures as used herein is defined as commodities or stocks bought or sold upon agreement of delivery in time to come.

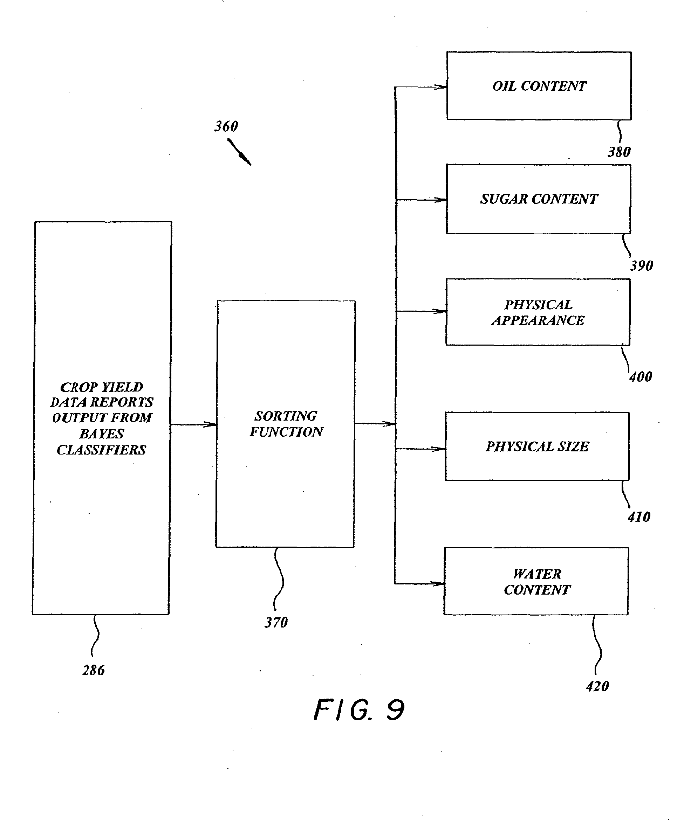

Referring to FIG. 9, there is shown a crop viability block diagram **360** showing the steps of identifying and categorizing the quality of agricultural commodities based upon the Bayes data **286**. The Bayes data **286** is passed through a sorting function **370** which separates the agricultural commodity such as blue ribbon corn **120** into quality sub-classes such as oil content **380**, sugar content **390**, physical appearance **400**, physical size **410**, and water content **420**. It should be understood here at this point by people skilled in the art that pluralities of other qualities of agricultural properties can be classified in like manner.

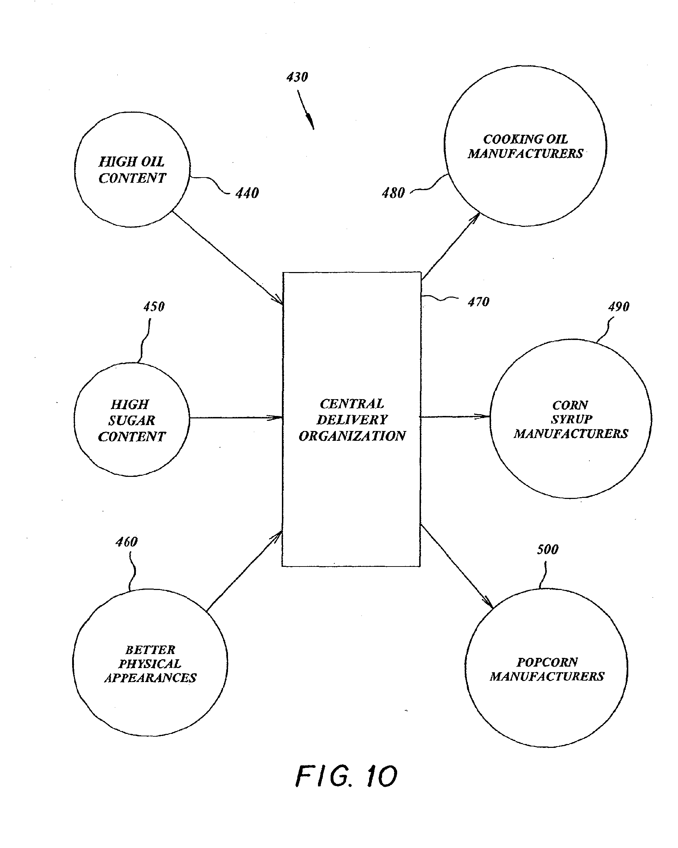

Referring next to FIG. 10, detailed is a delivery block diagram **430** of a central delivery system **470** for categorized commodities such as blue ribbon corn **120**. Due to the capabilities of remote sensing and Bayes classification techniques heretofore explained, blue ribbon corn **120** can be categorized into groupings of quality such as high oil content **440**, high sugar **450**, and better physical appearance **460**. Central delivery organization **470** having the ability to contact and sell to buyers such as cooking oil manufacturers **480**, corn syrup manufacturers **490**, and popcorn manufacturers **500**. Central delivery organization **470** creates a significant competitive advantage in that finer quality categorization will manifest itself as more rapid sales of commodities to potential buyers by having that buyer able to purchase exactly what is needed when needed.

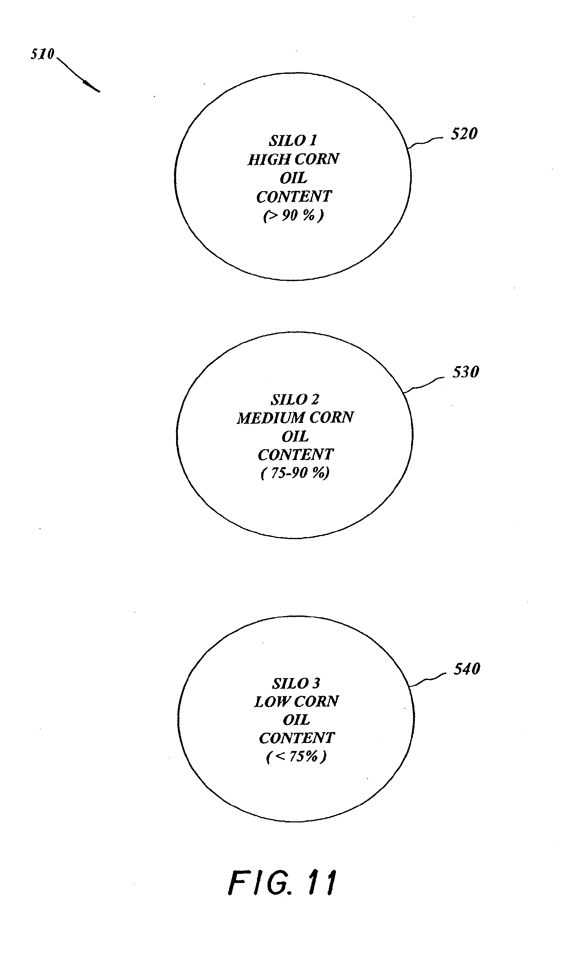

Referring now to FIG. 11, a storage diagram **510** of three storage facilities or silos is shown. Storage facility or silo number one **520** contains blue ribbon corn **120** with a high oil content of, for example, greater than 90%. Storage facility or silo number two **530** contains red ribbon corn **122** with a medium oil content of, for example, between 75% and 90%. Storage facility or silo number three **540** contains yellow ribbon corn **123** with a low oil content level of, for example, less than 75%. Since the cost of storage of agricultural commodities within storage facilities or silos is fixed and known, the ability to separate a priori into specific facilities by crop quality is cost advantageous. Therefore, sorting by quality significantly reduces carry cost by enabling the sale of commodities such as blue ribbon corn **120** at prices determined by their physical characteristics. Obviously, the ability to sell blue ribbon corn **120** in storage facility or silo number one **520** at a significantly higher price than corn stored in storage facility or silo number three **540** reduces the cost of storage through the separation of commodities by price. In a like manner, one is avoiding the mixing of blue-ribbon corn **120** with feed-quality corn **121** thus minimizing the unit cost of storage in a fixed container. This optimizes value since normally storage fees are charged by pound or volume.

## Claims

1. A method for predicting or monitoring the economic value of an agricultural commodity, the method comprising the steps of:
(a) remotely obtaining image data;
(b) analyzing the remote image for predetermined characteristics;
(c) using the analysis to determine a viability of the agricultural commodity; and
(d) transmitting the viability data to an interested party.

2. The method as in claim 1 wherein step (c) includes analyzing crop nitrogen content, soil moisture, soil fertilization, soil organic content, land topography, weed content, surface characteristics, infestation or characteristics thereof.

3. The method as in claim 2 further comprising the step of using weather forecast data, and historical weather data for predicting a more accurate future state of the agricultural commodity.

4. The method as in claim 1 wherein the remote image includes analyzing a state of an agricultural commodity.

5. The method as in claim 1 wherein step (d) includes using agricultural advisors, commodity traders, commodity sellers, commodity buyers, commodity customers, commodity producers, and commodity warehousers as the interested party.

6. The method as in claim 1 further comprising the step of identifying and categorizing quality of the agricultural commodity.

7. The method as in claim 1 wherein step (d) includes delivering the viability via a central service delivery organization.

8. The method as in claim 4, wherein the remote image includes analyzing a state of an agricultural commodity due to data suggesting infestation or any other form of plant stress.

9. The method as in claim 8, wherein the analysis is performed by expert systems or an appraiser.
